(19) Europäisches Patentamt
European Patent Office
Office européen des brevets

(11) **EP 2 576 880 B1**

(12) **EUROPEAN PATENT SPECIFICATION**

(45) Date of publication and mention
of the grant of the patent:
**27.04.2016 Bulletin 2016/17**

(21) Application number: **11786873.7**

(22) Date of filing: **24.05.2011**

(51) Int Cl.:
*D04H 1/728* *(2012.01)*   *D04H 1/42* *(2012.01)*
*D04H 3/16* *(2006.01)*   *B01D 71/06* *(2006.01)*
*D04H 1/4326* *(2012.01)*

(86) International application number:
**PCT/KR2011/003787**

(87) International publication number:
**WO 2011/149241 (01.12.2011 Gazette 2011/48)**

(54) **ELECTROLYTE MEMBRANE COMPRISING A POLYIMIDE POROUS WEB**

ELEKTROLYTMEMBRAN ENTHALTEND EINE PORÖSESE POLYIMIDBAHN

MEMBRANE ÉLECTROLYTIQUE COMPRENANT UNE TOILE POREUSE DE POLYIMIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.05.2010 KR 20100048546**
**25.05.2010 KR 20100048544**

(43) Date of publication of application:
**10.04.2013 Bulletin 2013/15**

(73) Proprietor: **Kolon Fashion Material, Inc.**
**Kyunggi-do 427-040 (KR)**

(72) Inventors:
• **KANG, Yun Kyung**
**Gumi-si**
**Gyeongsangbuk-do 730-938 (KR)**

• **OH, Heung Ryul**
**Seoul 157-280 (KR)**

(74) Representative: **Ter Meer Steinmeister & Partner Patentanwälte mbB**
**Nymphenburger Straße 4**
**80335 München (DE)**

(56) References cited:
**EP-A1- 2 037 029      EP-A1- 2 037 029**
**JP-A- 2005 019 026      KR-A- 20080 013 209**
**KR-A- 20080 060 264      KR-A- 20100 013 845**
**KR-A- 20100 035 208      KR-A- 20100 035 208**
**US-A1- 2007 075 015**

**Description**

[Technical Field]

The present invention relates to an electrolyte membrane comprising a polyimide porous web.

[Background Art]

A porous web may be used in various fields owing to advantages such as large surface area and good porosity, for example, the porous web may be used for a water-cleaning filter, an air-cleaning filter, a complex material, and a separation membrane in a cell. Especially, the porous web may be applied to an electrolyte membrane for a fuel cell of an automobile.

The fuel cell directly converts a chemical energy generated from an oxidation of fuel into an electric energy. The fuel cell has been spotlighted as a next-generation energy source since the fuel cell has advantages of high energy efficiency and eco-friendly properties of low environmental pollution. The fuel cell is structured in such a manner that anode and cathode are respectively positioned at both ends of the fuel cell with an electrolyte membrane interposed therebetween.

A typical example of the fuel cell for the automobile may be a proton exchange membrane fuel cell using hydrogen gas as a fuel. The electrolyte membrane used for the proton exchange membrane fuel cell serves as a path for transporting hydrogen ions generated in the anode to the cathode, whereby the electrolyte membrane should have basically good conductivity of the hydrogen ions. Also, the electrolyte membrane should be capable of facilitating to separate the hydrogen gas supplied to the anode and oxygen supplied to the cathode from each other. In addition, the electrolyte membrane should have good mechanical strength, good dimensional stability, good chemical resistance, and low resistance loss at a high current density. Especially, the electrolyte membrane should have good heat resistance, whereby the electrolyte membrane is not broken or damaged even when the fuel cell for the automobile is used at a high temperature for a long time.

Recently-used electrolyte membrane for the fuel cell is fluorine-based resin, that is, perfluoro-sulfone acid resin (Nafion: brand name, hereinafter, referred to as 'Nafion resin'). However, since the Nafion resin has low mechanical strength, the long-term use Nafion resin may have a pin-hole therein, thereby deteriorating energy conversion efficiency. There was an attempt to increase a thickness of the Nafion resin for intensification of the mechanical strength. In this case, resistance loss is increased and economical efficiency is deteriorated due to the increase of thickness.

In order to overcome these problems, there has been proposed an electrolyte membrane with improved mechanical strength, which uses a porous polytetrafluoroethylene (Teflon: brand name, hereinafter, referred to as 'Teflon') membrane as a reinforcing agent, and uses the impregnated Nafion resin as an ion conductor. In comparison to the electrolyte membrane formed only of the Nafion resin, the electrolyte membrane using both the porous Teflon membrane and the Nafion resin has the relatively-high mechanical strength, however, the relatively-low ion conductivity. Also, since an adhesive strength of the Teflon is very low, an adhesive strength between the Teflon reinforcing agent and the Nafion resin may be lowered in accordance with the change of operating conditions such as temperature or humidity for an operation of the fuel cell, thereby deteriorating separability between hydrogen and oxygen. Also, since the Teflon corresponding to fluorine-based polymer is apt.to be impregnated only in the fluorine-based ion conductor resin such as the Nafion, it is difficult to apply the ion conductor of other materials except the fluorine-based ion conductor resin. Furthermore, the porous Teflon as well as the Nafion resin is high-priced so that the economical efficiency is deteriorated for mass production.

In order to overcome these problems, instead of the Teflon reinforcing agent, an ordinary hydrocarbon-based resin may be used as the reinforcing agent, for example, polyethylene, polypropylene, polysulfone, polyethersulfone, and polyvinylidene fluoride; and a hydrocarbon-based resin including sulfonic acid group may be used as the ion conductor instead of the Nafion resin, which enables to improve efficiency and reduce manufacturing cost.

In this case, the reduced manufacturing cost allows the improved economical efficiency. However, the hydrocarbon-based reinforcing agent for the membrane may be dissolved in an organic solvent, and may cause the deteriorated physical properties and heat resistance, whereby it cannot ensure durability.

Also, in case of Nonwoven fabric prepared by the general method or hydrocarbon-based membrane in a film type manufactured by the general method for preparing the separation membrane, it is difficult to make a thin film, and it has the low porosity, whereby may cause difficulties in adjusting pores.

Especially, due to difficulties in adjustment of pore size, pore sizes of the hydrocarbon-based membrane are not uniform, and the ion conductors are impregnated without uniformity. As a result, the hydrocarbon-based membrane has the relatively-low ion conductivity; and easily deforms under the environments of high temperature and humidity so that the efficiency of the hydrocarbon-based membrane may be deteriorated, and more seriously, the hydrocarbon-based membrane may be broken or damaged.

[Disclosure]

[Technical Problem]

Therefore, the present invention is directed to an electrolyte membrane comprising a polyimide porous web that substantially obviates one or more of the problems due to limitations and disadvantages of the related art.

An aspect of the present invention is to provide an electrolyte membrane with improved ion conductivity and good dimensional stability owing to ion conductors uniformly impregnated in a porous web with good porosity, good dimensional stability, and uniform pore size.

[Technical Solution]

To achieve these objects and other advantages and in accordance with the purpose of the invention, as embodied and broadly described herein, there is provided an electrolyte membrane as defined in claim 1

[Advantageous Effects]

According to a method for manufacturing a polyimide porous web used in the present invention, a porous web is thinned with easiness, and a pore size can be adjusted easily.

Also, a polyimide porous web used in the present invention is not dissolved in a typical organic solvent, and also has a high melting point, thereby obtaining good chemical resistance and heat resistance.

Also, since the polyimide porous web used in the present invention has uniform pores, ion conductors are uniformly impregnated in the porous web. Thus, an electrolyte membrane according to the present invention manufactured by the use of polyimide porous web used in the present invention have improved ion conductivity and high dimensional stability.

The electrolyte membrane having the good properties according to the present invention may be used for a fuel cell or secondary cell which needs lightness in weight, high efficiency, and good stability.

It is to be understood that both the foregoing general description and the following detailed description are exemplary and explanatory and are intended to provide further explanation of the invention as claimed.

[Description of Drawings]

FIG. 1 illustrates an SEM photograph showing a polyimide porous web used in the present invention.
FIG. 2 is a schematic view illustrating an electrospinning device used in the present invention.

[Best Mode]

Reference will now be made in detail to embodiments, examples of which are illustrated in the accompanying drawings. Wherever possible, the same reference numbers will be used throughout the drawings to refer to the same or like parts.

Hereinafter, a polyimide porous web used in the present invention will be described with reference to the accompanying drawings.

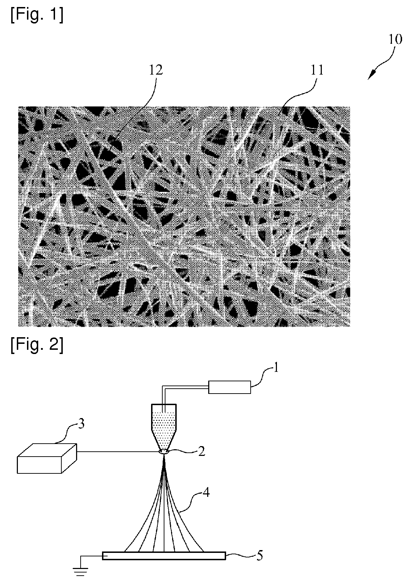

FIG. 1 illustrates an SEM photograph showing a polyimide porous web used in the present invention.

After a porous web is made by the use of polyimide precursor through an electrospinning process, the polyimide precursor is changed to polyimide by a chemical imidization or heat imidization.

In case of the polyimide porous web 10 used in the present invention, an imidization rate is not less than 90%, thereby obtaining good heat resistance and chemical resistance. If the imidization rate is less than 90%, the porous web 10 might be dissolved in an organic solvent, whereby it might be difficult to maintain properties necessary for the porous web 10.

As the imidization rate of the polyimide porous web 10 used in the present invention is not less than 90%, a melting point of the polyimide porous web 10 may be higher than 400°C. If the melting point of the porous web is lower than 400°C, the heat resistance is deteriorated so that the porous web 10 may deform easily. The deformation of the porous web 10 may cause deteriorated cell efficiency in a fuel cell or secondary cell manufactured by the use of porous web 10. Furthermore, manufactures with the porous web whose melting point is less than 400°C may have a serious problem such as explosion caused by abnormally-generated heat.

For manufacturing the polyimide porous web 10 used in the present invention, an electrospinning method enabling an easy control of a manufacturing process is applied, which facilitates to obtain a fiber 11 having a required diameter. Accordingly, it is possible to manufacture the porous web 10 whose porosity is not less than 60%.

In this specification, 'porosity' means a fraction of the volume of pores 12 over the total volume of the web 10, which is calculated by the following formula.

$$\text{Porosity}(\%) = (\text{air volume} / \text{total volume}) \times 100$$

In this case, the total volume is calculated by measuring width, length and thickness of a rectangle-shaped sample; and the air volume is obtained by subtracting a polymer volume from the total volume, wherein the polymer volume is calculated backward from a density after measuring a mass of the sample.

If the porosity of the porous web 10 is not less than 60%, the porous web 10 has a large specific surface. Thus, an ion conductor is readily impregnated in the porous web 10, whereby a manufactured electrolyte membrane has good ion conductivity.

Meanwhile, if the porosity of the porous web 10 is more than 99%, it deteriorates dimensional stability so that the following processes may not be smoothly carried out. In this respect, it is preferable that the porosity of the porous web 10 be not more than 99%.

The polyimide porous web 10 used in the present invention may have an average thickness of 5 ~ 50 $\mu$m. If the thickness of the porous web 10 is less than 5 $\mu$m, the mechanical strength and dimensional stability of the porous web 10 may be considerably deteriorated. Meanwhile, if the thickness of the porous web 10 is more than 50 $\mu$m, it is disadvantageous to lightness and integration in the manufacture.

In order to manufacture the polyimide porous web 10 having the porosity of 60% ~ 99% and the thickness of 5 $\mu$m ~ 50 $\mu$m ~ used in the present invention, the fibers 11 constituting the porous web 10 have the average diameter of 40 nm ~ 5,000 nm, preferably. If the average diameter is less than 40 nm, the mechanical strength may be deteriorated. If the average diameter is more than 5,000 nm, the porosity of the web 10 may be considerably deteriorated, and the thickness of the porous web 10 may be increased.

The polyimide porous web 10 used in the present invention may be used for manufacturing the electrolyte membrane for fuel cell. The electrolyte membrane for fuel cell further includes the ion conductor as well as the porous web 10, to thereby smoothly transport ions.

For the smooth transport of the ions in the electrolyte membrane, the ion conductors are uniformly impregnated in the entire porous web 10. For the smooth impregnation of the ion conductors, the average pore diameter of the porous web 10 is 0.05 $\mu$m ~ 3.0 $\mu$m, preferably. When the average pore diameter of the porous web 10 is less than 0.05 $\mu$m, the smooth impregnation of the ion conductors may be difficult. Meanwhile, when the average pore diameter of the porous web 10 is more than 3.0 $\mu$m, the strength of the porous web 10 may be deteriorated, and the ion conductors are excessively impregnated in the porous web 10.

If the size of the pores 12 in the porous web 10 is not uniform, the ion conductors are concentrated only in the specific pores 12, thereby deteriorating the ion conductivity of the electrolyte membrane. That is, as the size of the pores 12 in the porous web 10 becomes more uniform, the ion conductors may be uniformly impregnated in the entire porous web 10, whereby the electrolyte membrane may have the good ion conductivity. According to the present invention, not less than 80% of entire pores of the porous web 10 of the electrolyte membrane of the present invention have a pore diameter which differs from the average pore diameter of the porous web 10 by not more than 1.5 $\mu$m. The uniformity of the pore size may be achieved by a precise control of the electrospinning process.

The electrolyte membrane for fuel cell, may be easily exposed to the environments of high temperature and humidity. In this respect, good dimensional stability is necessary for the electrolyte membrane for fuel cell. If not, the electrolyte membrane and electrode may be separated at their interface, thereby deteriorating the cell efficiency of the fuel cell.

In order to check whether or not the electrolyte membrane for fuel cell has the dimensional stability under the environments of high temperature and humidity, volume change rate and thickness change rate under the environmental conditions similar to those of the environment when the fuel cell is operated are calculated by the following formulas 1 and 2, to thereby evaluate the dimensional stability.

[Formula 1]

$$\text{Volume change rate}(\%) = [(\text{Va} - \text{Vb}) / \text{Vb}] \times 100,$$

wherein 'Va' is the volume of the electrolyte membrane after a high humidity treatment under the conditions of 80°C temperature and 90% relative humidity for 4 hours; and 'Vb' is the volume of the electrolyte membrane before the high humidity treatment.

[Formula 2]

$$\text{Thickness change rate}(\%) = [(Ta - Tb) / Tb] \times 100,$$

wherein "Ta" is the thickness of the electrolyte membrane after a high humidity treatment maintained under the conditions of 80°C temperature and 90% relative humidity for 4 hours; and 'Tb' is the thickness of the electrolyte membrane before the high humidity treatment.

After the electrolyte membrane cut in a size of 10 cm × 10 cm is left in a thermo-hygrostat maintained under the operation environments for the fuel cell, that is, 80°C temperature and 90% relative humidity for 4 hours, the changed volume and thickness of the electrolyte membrane are measured, and are then applied to the above formulas, to thereby obtain the volume change rate and thickness change rate of the electrolyte membrane.

The volume change rate of the electrolyte membrane may be a reference to check efficiency deterioration and stability by the damage of the electrolyte membrane and the interfacial separation under the high temperature and humidity. Also, the thickness change rate of the electrolyte membrane may be a reference to check durability and stability of fuel cell stack including several tens to several hundreds of electrolyte membranes.

According to the present invention, the ion conductors are uniformly impregnated in the porous web 10 with the uniform pores, thereby resulting in the good dimensional stability of the electrolyte membrane. As a result, the electrolyte membrane of the present invention may have the volume change rate not more than 15% and the thickness change rate not more than 8%. The electrolyte membrane with the good dimensional stability according to the present invention allows high reliability in the fuel cell requiring high stability.

A method for manufacturing the polyimide porous web 10 used in one embodiment of the present invention will be described with reference to FIG. 2. FIG. 2 is a schematic view illustrating an electrospinning device according to one embodiment of the present invention.

As mentioned above, since the porous web 10 used in the present invention is manufactured by the electrospinning process, it is possible to precisely control the average diameter of the fibers constituting the web 10, to thereby manufacture the porous web having the uniform pore size and the high porosity.

However, since the polyimide for the porous web 10 used in the present invention is not dissolved in the organic solvent, it cannot be directly applied to the electrospining process. That is, a spinning solution for electrospining cannot be made by the use of polyimide.

Hence, the spinning solution for electrospinning is prepared by dissolving the polyimide precusor in the organic solvent; and a bundle of fibers is manufactured by electrospinning the prepared spinning solution. Then, the manufactured polyimide precursor porous web is imidized so that the polyimide porous web 10 is finally manufactured.

The polyimide precursor may use polyamic acid. The polyamic acid may be prepared by polymerizing diamine and dianhydride. The dianhydride may be prepared by at least one among PMDA (pyromellyrtic dianhydride), BTDA (Benzophenonetetracarboxylic dianhydride), ODPA(4,4'-oxydiphthalic anhydride), BPDA (biphenyltetracarboxylic dianhydride), and SIDA(bis(3,4-dicarboxyphenyl) dimethylsilane dianhydride). The diamine may be prepared by at least one among ODA(4,4'-oxydianiline), p-PDA(p-penylene diamine), and o-PDA(openylene diamine).

A solvent used for dissolving the polyamic acid may be at least one among m-cresol, N-methyl-2-pyrrolidone (NMP), dimethylformamide (DMF), dimethylacetamide (DMAc), dimethylsulfoxide (DMSO), acetone, diethylacetate, tetrahydrofuran (THF), chloroform, and γ-butyrolactone.

In the spinning solution, a concentration of the polyamic acid may be 5 ~ 20 weight%. If the concentration of the polyamic acid is less than 5 weight%, the unsmooth spinning makes it difficult to manufacture the fiber 11 normally or to manufacture the fiber 11 with the uniform diameter. Meanwhile, if the concentration of the polyamic acid is more than 20 weight%, a discharge pressure is rapidly increased so that the spinning is not performed or the process efficiency is deteriorated.

The polyimide precursor porous web including the fibers 11 with the average diameter of 40 nm ~ 5,000 nm is manufactured by the use of electrospinning device with the manufactured spinning solution, as shown in FIG. 2. That is, the spinning solution stored in a solution tank is constantly supplied to a spinning unit by the use of controlled-volume pump; and then the spinning solution is discharged via a nozzle 2 of the spinning unit, and is coagulated almost simultaneously with the discharging, to thereby prepare the fibers 4. The prepared fibers 4 are collected in a collector 5, thereby manufacturing the polyimide precursor porous web.

At this time, an electric field applied by a high-voltage generator 3 occurs between the collector 5 and the spinning unit, wherein an intensity of the electric field may be 750 ~ 3,500V/cm. If the intensity of electric field is less than 750V/cm, the spinning solution is not continually discharged so that the porous web with the uniform thickness is not manufactured. Also, since the fiber 4 coagulated after being spun and scattered is not smoothly collected in the collector 5, it is difficult to manufacture the porous web. Meanwhile, if the intensity of electric field is more than 3,500V/cm, the coagulated fiber 4 is not precisely collected in the collector 5, whereby it is difficult to obtain the porous web 10 with the normal shape.

Then, the polyimide porous web 10 is manufactured by imidizing the polyimide precursor porous web. This imidization may be performed by selectively using a heat imidization process or a chemical imidization process, or by jointly using the heat imidization process and chemical imidization process.

The chemical imidization process may be carried out by adding a dehydration agent such acetic anhydride and/or imidization catalyst such as pyridine to the spinning solution before the electrospinning process, or by treating the polyimide precursor porous web with the dehydration agent and/or imidization catalyst after the electrospinning process.

The heat imidization process may be carried out by heating the polyimide precursor porous web at a temperature of 80 ~ 400°C.

The imidization process is carried out at a draw rate not more than 0.2. In order to obtain the porous web 10 with the uniform pore and good porosity, the draw rate is not more than 0.2, preferably. If the draw rate is more than 0.2, the uniform thickness is not obtained due to the deformation of the porous web 10, and the tensile strength is deteriorated due to the low cohesive force. Meanwhile, the lower limit of the draw rate may be 0.0 corresponding to the non-drawn state, or may be not more than 0.1 corresponding to the excessively-drawn state, thereby realizing the smooth process, preventing deterioration of the porosity, and obtaining the appropriate thickness.

The polyimide porous web 10 has the imidization rate not less than 90% by the above imidization process. If the imidization rate is less than 90%, the heat resistance and chemical resistance of the porous web 10 may be deteriorated.

Hereinafter, the effect of the present invention will be fully understood through the following reference embodiments and comparative examples of the present invention.

The reference embodiments 1 to 5 and comparative examples 1 to 4 exemplarily describe the manufacturing method of the porous web using the polyimide precursor.

Reference Embodiment 1

After 12 weight% of spinning solution is manufactured by dissolving polyamic acid in a solvent of dimethylformamide, the manufactured spinning solution is spun via the nozzle 2 provided in the electrospinning device by the use of controlled-volume pump 1. Under the condition that an electric field is applied by the high-voltage generator 3, the spun spinning solution is scattered and coagulated fibers 4, to thereby prepare fibers 4. The coagulated fibers 4 are collected in the collector 5, thereby manufacturing a polyimide precursor porous web. At this time, a viscosity of the spinning solution is 40,000cPs, and the applied electric field is 2,500 V/cm.

Then, the polyimide precursor porous web is heated for 30 minutes by the use of hot press maintained at 200°C temperature, thereby manufacturing a polyimide porous web whose imidization rate is 99% and thickness is 30 $\mu$m.

Reference Embodiments 2 and 3

A polyimide porous web having 30 $\mu$m thickness is manufactured in the same method as described in the above embodiment 1 except that the electric field of 3,500 V/cm or 750 V/cm is applied.

Reference Embodiments 4 and 5

A polyimide porous web having 30 $\mu$m thickness is manufactured in the same method as described in the above embodiment 1 except that the spinning solution having the concentration of 8 weight% and the viscosity of 20,000cPs, or having the concentration of 18 weight% and the viscosity of 70,000cPs is used selectively.

Comparative examples 1 and 2

An electrospinning process is performed in the same method as described in the above embodiment 1 except that the electric field of 3,600 V/cm or 650 V/cm is applied.

Comparative examples 3 and 4

An electrospinning process is performed in the same method as described in the above embodiment 1 except that the spinning solution having the concentration of 4 weight% and the viscosity of 16,000cPs, or having the concentration of 25 weight% and the viscosity of 120,000cPs is used selectively.

The porous webs provided by the above reference embodiments 1 to 5 and comparative examples 1 to 4 have the average pore diameter; the rate of pores having the pore diameter which differs from the average pore diameter of the porous web by not more than 1.5 μm with respect to the entire pores; the porosity; the average diameter of fiber; the thermal stability; and the tensile strength, which are measured by the following methods, and are shown in the following Table 1.

Average pore diameter (μm)

The average pore diameter is indirectly measured by the use of image analyzer of electron microscope (Model No.: JSM6700F with magnification of 1.0K, manufactured by JEOL). In more detail, in order to measure the average pore diameter, an image is firstly obtained through an image-analyzing process using the electron microscope. Then, a pore portion, that is, 'A' area is measured from the image, wherein 'A' area corresponding to the pore portion is shown as a black-colored portion in the image. Also, 'B' corresponds to the number of effective pores, that is, the number of black image pieces in the 'A' and the black-colored portion of the image obtained by the electron microscope except defect and shadow of the image. Thereafter, a cell density may be calculated by applying the measured 'A' and 'B' to the following formula; and the average pore diameter may be calculated by the following formula using the cell density.

$$\text{Constant value = density of fiber base material polymer / density of porous web}$$

$$\text{Cell density} = (\text{B/A} \times 100) \times 3/2 \times 109 \times \text{constant value}$$

$$\text{Average pore diameter} = [(\text{constant value} - 1) \times 6 / (\pi \times \text{cell density})] \times 1/3 \times 104$$

Rate of pores having the pore diameter which differs from the average pore diameter by not more than 1.5 μm with respect to the entire pores

The rate of pores having the pore diameter which differs from the average pore diameter of the porous web by not more than 1.5 μm with respect to the entire pores is measured based on the contents stated in 'Mercury porosimeter win9400 series v. 1.02'. In more detail, under the low-pressure condition, a pressure of 200 mmHg is applied for 10 minutes; a pressure of mercury is 0.49psi; equilibrium time is set to be equal to 10 seconds; and a maximum permeation volume is set to 100,00 mℓ/g. Meanwhile, under the high-pressure condition, equilibrium time is set to be equal to 10 seconds; and a maximum permeation volume is set to 100,00 mℓ/g.

Porosity(%)

The porosity in each porous web may be obtained by calculating the rate of air volume with respect to the total volume by the following formula. At this time, the total volume is calculated by measuring the width, length and thickness of the prepared sample; and the air volume is obtained by subtracting the polymer volume from the total volume, wherein the polymer volume is calculated backward from the density after measuring the mass of the sample.

$$\text{Porosity(\%)} = (\text{air volume / total volume}) \times 100$$

Average diameter of fiber

A length of the thickest portion in 40 fiber strands non-overlapped is measured from a digital photograph taken by the use of scanning electron microscope (SEM) with magnification of 500x or more; the measured length is calculated in terms of pixel number; and then the mean of the measured values is calculated.

Thermal stability

The porous web is regarded as having thermal stability when a specific peak is not shown for the 2nd run measurement with differential scanning calorimetry (DSC) under the conditions of 20 ~ 200°C temperature and 20°C/minute heating rate.

Tensile strength

The tensile strength of reinforcing agent and reinforced composite membrane may be measured based on a test method of ISO 527-5:2009(Plastics-Determination of tensile properties).

[Table 1]

| | Electric field (V/cm) | Concentration of spinning solution (weight %) | Average pore diameter (μm) | Rate of pores having the pore diameter within the range of average pore diameter ± 1.5μm(%) | Porosity (%) | Average diameter of fibers (nm) | Thermal stability | Tensile strength (VPa) | imidization rate(%) | Notes |
|---|---|---|---|---|---|---|---|---|---|---|
| Embodiment 1 | 2,500 | 12 | 2.53 | 91.2 | 90.0 | 904 | Thermally stabilized | 22.7 | 98.1 | |
| Embodiment 2 | 3,500 | 12 | 2.40 | 93.1 | 93.4 | 972 | Thermally stabilized | 25.3 | 97.9 | |
| Embodiment 3 | 750 | 12 | 2.67 | 86.2 | 86.5 | 1009 | Thermally stabilized | 28.4 | 92.4 | |
| Embodiment 4 | 2,500 | 8 | 2.38 | 80.3 | 91.7 | 743 | Thermally stabilized | 19.6 | 98.6 | |
| Embodiment 5 | 2,500 | 18 | 2.47 | 84.5 | 90.8 | 2532 | Thermally stabilized | 31.6 | 92.2 | |
| Comparative example 1 | 3,600 | 12 | 4.65 | 65.2 | 90.6 | 1631 | Thermally stabilized | 12.3 | 95.0 | |
| Comparative example 2 | 650 | 12 | - | - | - | - | - | - | - | Spinning is impossible |
| Comparative example 3 | 2,500 | 4 | - | - | - | - | - | - | - | Dot shape being sprayed |
| Comparative example 4 | 2,500 | 25 | 7.05 | 60.3 | 58.5 | 5658 | Thermally stabilized | 9.5 | 93.2 | Not web type but porous film type |

Embodiments 1-5 are reference embodiments.

The effect obtained when the polyimide porous webs proposed in the above reference embodiments 1 to 5 are used as the reinforcing agent of the electrolyte membrane will be illustrated by the following embodiments and comparative examples.

Embodiment 6

After 12 weight% of ion conductor solution is prepared by dissolving sulfonated polyimide in N-methyl-2-pyrrolidone, the polyimide porous web prepared by the above reference embodiment 1 is used as the reinforcing agent. Then, the polyimide porous web is twice impregnated in the prepared ion conductor solution for 20 minutes, and is left for 1 hour while under the reduced pressure; and then is dried for 3 hours by a hot air at 80°C, thereby manufacturing an electrolyte membrane having 50 $\mu$m thickness.

Embodiments 7 and 8

An electrolyte membrane having 50 $\mu$m thickness is manufactured in the same method as described in the above embodiment 6 except that the polyimide porous web prepared by the above reference embodiment 2 or 3 is used as the reinforcing agent.

Embodiments 9 and 10

An electrolyte membrane having 50 $\mu$m thickness is manufactured in the same method as described in the above embodiment 6 except that the polyimide porous web prepared by the above refrence embodiment 4 or 5 is used as the reinforcing agent.

Comparative example 5

An electrolyte membrane having 50 $\mu$m thickness is manufactured in the same method as described in the above embodiment 6 except that a PI porous film having 30 $\mu$m thickness is used as the reinforcing agent, wherein the PI porous film is manufactured by a porous film manufacturing method which forms pores in a film by mixing, discharging and solidifying solvent-soluble particles for a film-making process; and dissolving the mixed particles.

Comparative example 6

An electrolyte membrane having 50 $\mu$m thickness is manufactured in the same method as described in the above embodiment 6 except that ePTFE porous film (W.L.Gore, Teflon) having 30 $\mu$m thickness, which is already on the market, is used as the reinforcing agent.

Comparative example 7

An electrolyte membrane having 50 $\mu$m thickness is manufactured by preparing 12 weight% of ion conductor solution by dissolving sulfonated polyimide in a solution of N-methyl-2-pyrrolidone; making a film from the prepared ion conductor solution; and drying the made film.

The volume change rate and thickness change rate of the electrolyte membranes prepared by the above embodiments 6 to 8 and comparative examples 5 to 7 are measured by the following methods, which will be shown in the following Table 2.

Volume change rate of electrolyte membrane(%)

After the electrolyte membrane cut in a size of 10 cm $\times$ 10 cm is left in a thermo-hygrostat maintained under the operation environments for the fuel cell, that is, 80°C temperature and 90% relative humidity for 4 hours, the volume(Va) is obtained by measuring the respective lengths in the x-axis, y-axis, and z-axis of the changed electrolyte membrane; and the volume(Vb) is obtained before the above humidity treatment. The volume change rate of the electrolyte membrane is obtained by applying the obtained (Va) and (Vb) to the following formula.

$$\text{Volume change rate}(\%) = [(Va - Vb) / Vb] \times 100$$

Thickness change rate(%)

The thickness change rate is obtained by applying the thickness(Ta) of the electrolyte member after the high temperature and humidity treatment whose conditions are the same as those described in the above volume change rate, and the thickness(Tb) of the electrolyte member before the high temperature and humidity treatment into the following formula.

$$\text{Thickness change rate}(\%) = [(Ta - Tb)/Tb] \times 100$$

[Table 2]

|  | Type of electrolyte membrane | Type of Reinforcing Agent | Volume change rate of electrolyte membrane(%) | Thickness change rate of electrolyte membrane(%) |
|---|---|---|---|---|
| Embodiment 6 | Composite membrane | PI porous web | 13.2 | 6.5 |
| Embodiment 7 | Composite membrane | PI porous web | 12.9 | 5.9 |
| Embodiment 8 | Composite membrane | PI porous web | 14.1 | 6.8 |
| Embodiment 9 | Composite membrane | PI porous web | 13.8 | 6.2 |
| Embodiment 10 | Composite membrane | PI porous web | 14.6 | 7.1 |
| Comparative example 5 | Composite membrane | PI porous web | 19.7 | 9.8 |
| Comparative example 6 | Composite membrane | ePTFE porous film | 16.4 | 8.5 |
| Comparative example 7 | membrane of Single material | not used | 23.1 | 10.2 |

## Claims

1. An electrolyte membrane comprising:

   a polyimide porous web having a porosity of 60% to 90%; and
   an ion conductor uniformly impregnated in the polyimide porous web,
   wherein the polyimide porous web has pores of such uniformity that not less than 80% of entire pores of the porous web have a pore diameter which differs from an average pore diameter of the polyimide porous web by not more than 1.5 $\mu$m.

2. The electrolyte membrane according to claim 1, wherein the ion conductor is impregnated in the polyimide porous web so uniformly that the electrolyte membrane has a volume change rate less than 15%, the volume change rate defined by formula 1 below:

   formula 1: volume change rate(%) = [(Va - Vb)/Vb] $\times$ 100
   wherein Va is a volume of the electrolyte member after high-humidity treatment under a temperature of 80°C and a relative humidity of 90%, and Vb is a volume of the electrolyte membrane before the high-humidity treatment.

3. The electrolyte membrane according to claim 1 or 2, wherein the ion conductor is impregnated in the polyimide porous web so uniformly that the electrolyte membrane has a thickness change rate less than 8%, the thickness change rate defined by formula 2 below:

formula 2: thickness change rate(%) = [(Ta - Tb)/Tb]×100 wherein Ta is a thickness of the electrolyte member after high-humidity treatment for 4 hours under a temperature of 80°C and a relative humidity of 90%, and Tb is a thickness of the electrolyte membrane before the high-humidity treatment.

**Patentansprüche**

1. Elektrolytmembran umfassend:

ein poröses Polyimid-Netz mit einer Porosität von 60% bis 90%; und
einen Ionenleiter, der in das poröse Polyimid-Netz gleichmäßig imprägniert ist,
worin das poröse Polyimid-Netz Poren derartiger Gleichmäßigkeit aufweist, dass nicht weniger als 80% der gesamten Poren des porösen Netzes einen Porendurchmesser aufweisen, der von dem mittleren Porendurchmesser des porösen Polyimidnetzes um nicht mehr als 1,5 $\mu$m differiert.

2. Elektrolytmembran nach Anspruch 1, worin der Ionenleiter in das poröse Polyimid-Netz derartig gleichmäßig imprägniert ist, dass die Elektrolytmembran eine Volumenänderungsrate von weniger als 15% aufweist, wobei die Volumenänderungsrate durch die folgende Formel 1 definiert ist:

$$\text{Formel 1: Volumenänderungsrate (\%)} = [(Va-Vb)/Vb]\times100$$

worin Va das Volumen der Elektrolytmembran nach einer Hochfeuchtigkeitsbehandlung bei einer Temperatur von 80°C und einer relativen Feuchtigkeit von 90% darstellt und Vb das Volumen der Elektrolytmembran vor der Hochfeuchtigkeitsbehandlung ist.

3. Elektrolytmembran nach Anspruch 1 oder 2, worin der Ionenleiter in das poröse Polyimid-Netz derartig gleichmäßig imprägniert ist, dass die Elektrolytmembran eine Dickenänderungsrate von weniger als 8% aufweist, wobei die Dickenänderungsrate durch die folgende Formel 2 definiert ist:

$$\text{Formel 2: Dickenänderungsrate (\%)} = [(Ta-Tb)/Tb]\times100$$

worin Ta die Dicke der Elektrolytmembran nach einer Hochfeuchtigkeitsbehandlung innerhalb von 4 Stunden bei einer Temperatur von 80°C und einer relativen Feuchtigkeit von 90% darstellt und Tb die Dicke der Elektrolytmembran vor der Hochfeuchtigkeitsbehandlung ist.

**Revendications**

1. Une membrane électrolytique comprenant :

un tissu poreux de polyimide ayant une porosité de 60% à 90% ; et
un conducteur ionique uniformément imprégné dans le tissu poreux de polyimide,
dans laquelle le tissu poreux de polyimide a des pores de telle uniformité qu'au moins 80% de la totalité des pores du tissu poreux a un diamètre de pore qui ne diffère pas plus que 1,5 $\mu$m d'un diamètre de pore moyen du tissu poreux de polyimide.

2. La membrane électrolytique selon la revendication 1, dans laquelle le conducteur ionique est imprégné dans le tissu poreux de polyimide tellement uniformément, que la membrane électrolytique a un taux de variation de volume inférieur à 15%, le taux de variation de volume étant défini par la formule 1 en bas :

$$\text{formule 1 : taux de variation de volume (\%)} = [(V_a - V_b) / V_b] \times 100$$

dans laquelle $V_a$ est un volume de la membrane électrolytique après traitement à humidité élevée à une température de 80°C et une humidité relative de 90%, et $V_b$ est un volume de la membrane électrolytique avant le traitement à humidité élevée.

3. La membrane électrolytique selon la revendication 1 ou 2, dans laquelle le conducteur ionique est imprégné dans le tissu poreux de polyimide tellement uniformément, que la membrane électrolytique a un taux de variation d'épaisseur inférieur à 8%, le taux de variation d'épaisseur étant défini par la formule 2 en bas :

$$\text{formule 2 : taux de variation d'épaisseur (\%)} = [(T_a - T_b) / T_b] \times 100$$

dans laquelle $T_a$ est une épaisseur de la membrane électrolytique après traitement à humidité élevée pendant 4 heures à une température de 80°C et une humidité relative de 90%, et $T_b$ est une épaisseur de la membrane électrolytique avant le traitement à humidité élevée.

[Fig. 1]

[Fig. 2]